# EUROPEAN PATENT APPLICATION

(11) **EP 4 061 030 A1**
(43) Date of publication of application: **21.09.2022**
(21) Application number: 22161470.4
(22) Date of filing: 10.03.2022
(51) Int. Cl.: H04W 8/00, H04W 48/16, H04W 84/12, H04W 88/04

(54) **METHOD AND APPARATUS FOR PROVIDING WLAN SENSING SERVICE, TERMINAL DEVICE, AND STORAGE MEDIUM**

(30) Priority: 18.03.2021 CN 202110289534
(71) Applicant: Chengdu Xgimi Technology Co., Ltd, Chengdu, Sichuan 610041 (CN)
(72) Inventor: Wu, Hao, Chengdu, 610041 (CN); Dai, Shengwei, Chengdu, 610041 (CN); Wang, Xin, Chengdu, 610041 (CN)
(74) Representative: Barker Brettell LLP

(57) **Abstract**

The disclosure relates to the technical field of WLAN (wireless local area network) communications, and specifically to a method and apparatus for providing a WLAN sensing service, a terminal device, and a storage medium. The method is applied to a terminal device, and the terminal device includes a terminal device NSCS without a WLAN sensing capability. The method includes steps of: sending a sensing service request frame to a terminal device SCS with a WLAN sensing capability, the sensing service request frame including a sensing service identifier (Sensing SID); receiving a sensing service response frame sent by the SCS, the sensing service response frame including a Status code and a Sensing SID, and the Status code indicates that the SCS agrees or disagrees to provide a sensing service; and receiving a sensing result acquired when the SCS performs a WLAN sensing progress. In the disclosure, according to the method for providing WLAN sensing for the terminal device without the WLAN sensing capability through the device with the WLAN sensing capability, so that such devices can provide more abundant applications according to a WLAN sensing function without increasing any hardware and software costs.

## Description

### Cross-Reference to Related Application

The disclosure claims priority to Chinese Patent Application No. 202110289534 .0, filed on March 18, 2021 and entitled "Method and Apparatus for Providing WLAN Sensing Service, Terminal Device, and Storage Medium", the disclosure of which is hereby incorporated by reference in its entirety.

### Technical Field

The disclosure relates to the technical field of WLAN communications, specifically to a method and apparatus for providing a WLAN sensing service, a terminal device, and a storage medium.

### Background

As a new technical feature, WLAN (wireless local area network) sensing involves data acquisition, preprocessing, denoising, anomaly detection, feature extraction, classification, identification, etc. Therefore, WLAN sensing requires more complex computing capability. Due to a wide variety of WLAN devices, not all the WLAN devices will be equipped with hardware and software capabilities of WLAN sensing in terms of device price and cost, and these devices cannot provide richer services through the WLAN sensing.

### Summary

The embodiments of the disclosure aim to provide a method and apparatus for providing a WLAN (wireless local area network) sensing service, a terminal device, and a storage medium, so as to solve the above problems.

According to a first aspect of the embodiments of the disclosure, a method for providing a WLAN sensing service provided by an embodiment of the disclosure includes:
the method for providing a WLAN sensing service is applied to a terminal device, and the terminal device includes a terminal device Non Sensing Capable STA (NSCS), the method includes:
A sensing service request frame is sent to a terminal device Sensing Capable STA (SCS) with a WLAN sensing capability, the sensing service request frame includes a sensing service identifier (Sensing SID);
A sensing service response frame sent by the SCS is received, the sensing service response frame includes a Status code and a Sensing SID, the Status code indicates that the SCS agrees or disagrees to provide a sensing service; and
A sensing result acquired when the SCS performs a WLAN sensing progress is received.

Alternatively, before the step of sending a sensing service request frame to the SCS, the method further includes: WLAN sensing capability information of the SCS is acquired.

Alternatively, the WLAN sensing capability information includes WLAN sensing capability information cell (WSENS Capability), and the WSENS Capability includes the Sensing SID.

Alternatively, the WLAN sensing capability information of the SCS is acquired by means of a Beacon message or a Probe response message or an Association Response message.

Alternatively, the Sensing SID includes one or more of a service scenario identifier, a measurement accuracy identifier, and a service type identifier.

Alternatively, the sensing result acquired when the SCS performs the WLAN sensing progress is received includes:
in a case that the Status code indicates that the SCS agrees to provide a sensing service, receiving a sensing service report frame sent after the SCS performs the WLAN sensing progress, the sensing service report frame including a parameter, namely a service result, and the service result being used for setting a sensing result calculated according to a sensing measurement result.

Alternatively, the method further includes:
the service result is sent to a station management entity (SME) or application entity.

Alternatively, the SCS performs the WLAN sensing progress, includes:
a WLAN sensing signal is sent by the SCS, and the WLAN sensing signal is received and measured;
or the SCS performs the WLAN sensing progress by coordinating with other SCSs.

According to a second aspect of the embodiments of the disclosure, a method for providing a WLAN sensing service provided by an embodiment of the disclosure, applied to a terminal device, and the terminal device includes a terminal device SCS, the method includes:
a sensing service request frame sent by an NSCS is received, the sensing service request frame includes a Sensing SID; and
a sensing service response frame to the NSCS is sent; in a case that responding the sensing service response frame to agree to provide a requested sensing service, a WLAN sensing progress is performed, and a sensing service report frame is sent to the NSCS.

Alternatively, in a case that responding the sensing service response frame to agree to provide a requested sensing service, the WLAN sensing progress is performed, and the sensing service report frame is sent to the NSCS, includes:
a WLAN sensing signal is sent, and the WLAN sensing signal is received and measured;
or the WLAN sensing progress is performed by coordinating with other SCSs.

Alternatively, the WLAN sensing signal is sent, and the WLAN sensing signal is received and measured, includes:
a WLAN sensing signal is sent, a reflected signal is received and measured, and a sensing result is calculated according to a service corresponding to the Sensing SID; and
a parameter, namely service result, is set according to the sensing result, and the sensing service report frame is sent to the NSCS, the sensing service report frame includes the parameter, namely service result, and the service result is used for setting a sensing result calculated according to a sensing measurement result.

Alternatively, the WLAN sensing progress is performed by coordinating with other SCSs, includes:
target SCSs are detected, the target SCSs include at least one SCS that is connected to another SCS;
a sensing request frame is sent to the target SCSs;
sensing response frames sent by the target SCSs are received;
the target SCS, the sensing response frame of which instructs agreeing to coordinately perform the WLAN sensing progress, is selected form the target SCSs as a coordinated SCS; and
the WLAN sensing progress is performed by coordinating with the coordinated SCS, and the sensing service report frame is sent to the NSCS, the sensing service report frame includes the parameter, namely service result, and the service result is used for setting a sensing result calculated according to a sensing measurement result.

Alternatively, the WLAN sensing progress is performed by coordinating with the coordinated SCS, includes:
a WLAN sensing signal is sent to the coordinated SCS;
channel status information (CSI) acquired is received, according to the WLAN sensing signal, by the coordinated SCS; and
according to the CSI, the sensing result is calculated, and according to the sensing result, the parameter, namely service result, is set.

Alternatively, the WLAN sensing progress is performed by coordinating with the coordinated SCS, includes:
a sensing data packet announcement frame is sent, and after a system time interval (SIFS), a WLAN sensing signal is sent to the coordinated SCS;
CSI acquired, according to the WLAN sensing signal, is received by the coordinated SCS; and according to the CSI, the sensing result is calculated, and according to the sensing result, the parameter, namely service result, is set.

Alternatively, the WLAN sensing progress is performed by coordinating with the coordinated SCS, includes:
a trigger message is sent to the coordinated SCS;
a WLAN sensing signal sent, according to the trigger message, is received by the coordinated SCS; and
the WLAN sensing signal is received, the sensing result is calculated, and according to the sensing result, the parameter, namely service result, is set.

Alternatively, the WLAN sensing progress is performed by coordinating with the coordinated SCS, includes:
a sensing confirm frame is sent to the coordinated SCS;
according to the sensing confirm frame, a WLAN sensing signal sent by the coordinated SCS is received; and
the WLAN sensing signal is received, the sensing result is calculated, and according to the sensing result, the parameter, namely service result, is set.

Alternatively, the WLAN sensing progress is performed by coordinating with the coordinated SCS, includes:
a sensing data packet announcement frame sent by the coordinated SCS and a WLAN sensing signal sent after a SIFS are received, the sensing data packet announcement frame is positioned behind the sensing response frame; and
the WLAN sensing signal is received, the sensing result is calculated, and the parameter, namely service result, is set.

According to a third aspect of the embodiments of the disclosure, an apparatus provided in an embodiment of the disclosure includes:
a communication module I, configured to send a sensing service request frame to a terminal device SCS with a WLAN sensing capability, the sensing service request frame includes a sensing service identifier (Sensing SID); and
a communication module II, configured to receive a sensing service response frame sent by the SCS, the sensing service response frame includes a Status code and a Sensing SID, and the Status code indicates that the SCS agrees or disagrees to provide a sensing service; and configured to receive a sensing result acquired when the SCS performs a WLAN sensing progress.

According to a fourth aspect of the embodiments of the disclosure, an apparatus provided in an embodiment of the disclosure includes:
a sensing module III, configured to receive a sensing service request frame sent by an NSCS, the NSCS is a terminal device without a WLAN sensing capability, the sensing service request frame includes a Sensing SID; and
a sensing module IV, configured to send a sensing service response frame to the NSCS; configured to perform, according to the sensing service that is agreed to be provided, a WLAN sensing progress, and send a sensing service report frame to the NSCS.

The apparatus provided by the embodiment of the disclosure has the same beneficial effects as those of the method for providing a WLAN sensing service provided in the foregoing first aspect or any optional implementation mode of the first aspect, and descriptions thereof are omitted here.

According to a fifth aspect of the embodiments of the disclosure, a terminal device provided in an embodiment of the disclosure includes a processor and a memory. The memory stores a computer program, and the processor is configured to execute the computer program to implement the method for providing a WLAN sensing service provided in the foregoing first aspect or any optional implementation mode of the first aspect.

According to a sixth aspect of the embodiments of the disclosure, an embodiment of the disclosure further provides a storage medium. The storage medium stores a computer program. The computer program, when executed, implements the method for providing a WLAN sensing service provided in the foregoing first aspect or any optional implementation mode of the first aspect.

The storage medium provided by the embodiment of the disclosure has the same beneficial effects as those of the above-mentioned first aspect or the method for providing a WLAN sensing service provided in any optional implementation mode of the first aspect, and descriptions thereof are omitted here.

In the disclosure, according to the method for providing WLAN sensing for the terminal device without the WLAN sensing capability through the device with the WLAN sensing capability, so that such devices can provide more abundant applications according to a WLAN sensing function without increasing any hardware and software costs.

### Brief Description of the Drawings

In order to explain the technical solutions of the embodiments of the disclosure more clearly, the following will briefly introduce the accompanying drawings used in the embodiments of the disclosure. It should be understood that the drawings in the following description only illustrate some embodiments of the disclosure and thus shall not be deemed as limiting the scope. Those of ordinary skill in the art can obtain other related drawings based on these drawings without creative work.
Fig. 1 is a schematic diagram of communication connection of the disclosure;
Fig. 2 is a schematic diagram of communication connection of self WLAN sensing measurement of an SCS of the disclosure;
Fig. 3 is a schematic diagram of communication connection of WLAN sensing measurement of an SCS and other SCSs of the disclosure;
Fig. 4 is a flowchart I of an NSCS of the disclosure;
Fig. 5 is a flowchart II of an NSCS of the disclosure;
Fig. 6 is a flowchart I of an SCS of the disclosure; and
Fig. 7 is a flowchart of WLAN sensing progress performed by coordination between an SCS and other SCSs.

### Detailed Description of the Embodiments

In order to make the objectives, technical solutions and advantages of the embodiments of the disclosure clearer, the technical solutions in the embodiments of the disclosure are described below in conjunction with the drawings in the embodiments of the disclosure. In addition, it should be noted that similar reference signs and letters indicate similar items in the following drawings. Therefore, once a certain item is defined in one drawing, it is unnecessary to be further defined and explained in the subsequent drawings.

It is found by the study of the inventor that due to a wide variety of WLAN devices, not all the WLAN devices will be equipped with hardware and software capabilities of WLAN sensing in terms of device price and cost, and these devices cannot provide richer services through the WLAN sensing.

Based on the above study, this embodiment provides a method for providing a WLAN sensing service. In the disclosure, the device with the WLAN sensing capability is called Sensing Capable STA (SCS), and the device without the WLAN sensing capability is called Non Sensing Capable STA (NSCS). The NSCS is connected to one SCS. For example, one terminal is connected to a network access point (AP). This terminal is an NSCS, and the AP is an SCS.

The NSCS acquires capability information of the SCS by means of a Beacon message, or a probe response message, or an association response message. The capability information includes a WLAN sensing capability information cell (WSENS Capability), and WSENS is an abbreviation of WLAN sensing. The information cell contains parameters as shown in Table 1:

**Table 1**

| Parameter | Description |
|---|---|
| Sensing SID | Sensing service identifier, used for indicating a sensing service supported by the SCS |

The sensing SID may be identified according to a service scenario, such as smart home, in-car, security, and health care, may be identified according to a measurement accuracy, such as fine-grained, mid-grained, and coarse grained, and may be identified according to a service type, such as positioning, gesture recognition, heart rate/breathing rate, and presence/proximity.

The NSCS sends a sensing service request frame to the SCS. The sensing service request frame contains parameters as shown in Table 2:

**Table 2**

| Parameter | Description |
|---|---|
| Sensing SID | Indicating a sensing service requested by the NSCS |

The SCS receives the sensing service request frame, in a case that responding the sensing service response frame to agree to provide all or part of sensing services requested by the NSCS for the NSCS, the SCS sets a value of a parameter, namely status code, to be SUCCESS. If the SCS disagrees to provide a sensing service for the NSCS, the SCS sets the value of the parameter, namely status code, to be REFUSED and sends a sensing service response frame to the NSCS. The sensing service response frame contains parameters as shown in Table 3:

**Table 3**

| Parameter | Description |
|---|---|
| Status code | The SCS agrees or disagrees to provide a sensing service; |
| Sensing SID | Indicating the sensing service that the SCS agrees to provide; |

If the SCS agrees to provide a sensing service for the NSCS, the SCS performs a WLAN sensing progress;
the SCS sends a WLAN sensing signal, receives a reflected signal, thus acquiring a measurement result, sets a parameter, namely service result, according to a service corresponding to the Sensing SID and a calculation result, and sends a sensing service report frame to the NSCS, the sensing service report frame includes the parameter, namely service result. The service result is used for setting a sensing result calculated according to a sensing measurement result.

The SCS checks locally stored capability information of other devices connected to the SCS and selects a device, i.e., other SCSs, with WLAN sensing. The SCS that receives the sensing service request frame of the NSCS is called a coordinator SCS. The coordinator SCS sends a sensing request frame to other SCSs connected to it.

After other SCSs receive the sensing request frame, if they agree to perform the WLAN sensing progress, the SCSs send a sensing response frame to the coordinator SCS and are instructed to agree to perform the WLAN sensing progress;
after the coordinator SCS receives the sensing response message, an SCS that performs the WLAN sensing progress together with the coordinator SCS is selected from other SCSs that send the sensing response message and are instructed to agree with the execution, and the selected SCS is called a coordinated SCS.

Modes for performing the WLAN sensing progress by coordination between the coordinator SCS and the coordinated SCS include the following.

The coordinator SCS sends a WLAN sensing signal to the coordinated SCS; the coordinated SCS receives the WLAN sensing signal, measures channel status information (CSI), and sends the CSI to the coordinator SCS. The coordinator calculates, according to the received CSI, a sensing result, sets, according to a calculation result, a parameter, namely service result, and sends a sensing service report frame to the NSCS. The sensing service report frame includes the parameter, namely service result. The service result is used for setting a sensing result calculated according to a sensing measurement result.

The coordinator SCS sends a sensing data packet announcement frame, and sends a WLAN sensing signal to the coordinated SCS after a system time interval SIFS. The coordinator receives the WLAN sensing signal, measures CSI, and sends the CSI to the coordinator SCS. The coordinator calculates, according to the received CSI, a sensing result, sets, according to a calculation result, a parameter, namely service result, and sends a sensing service report frame to the NSCS. The sensing service report frame includes the parameter, namely service result.

The coordinator SCS sends a trigger message to the coordinated SCS. After receiving the trigger message, the coordinated SCS sends a WLAN sensing signal to the coordinator SCS. The coordinator SCS calculates, according to the received WLAN sensing signal, a sensing result, sets, according to a calculation result, a parameter, namely service result, and sends a sensing service report frame to the NSCS. The sensing service report frame includes the parameter, namely service result.

The coordinator SCS sends a sensing confirm frame to the coordinated SCS. After receiving the sensing confirm frame, the coordinated SCS sends a WLAN sensing signal to the coordinator SCS. The coordinator SCS calculates, according to the received WLAN sensing signal, a sensing result, sets, according to a calculation result, a parameter, namely service result, and sends a sensing service report frame to the NSCS. The sensing service report frame includes the parameter, namely service result.

During the sending of the sensing response frame, if the coordinated SCS is instructed to agree to perform the WLAN sensing progress, after the sensing response frame has been sent, the coordinated SCS sends a sensing data packet announcement frame, and after an SIFS, sends a WLAN sensing signal to the coordinator SCS. The coordinator SCS calculates, according to the received WLAN sensing signal, a sensing result, sets, according to a calculation result, a parameter, namely service result, and sends a sensing service report frame to the NSCS. The a sensing service report frame includes the parameter, namely service result.

After receiving the sensing service report, the NSCS sends the service result to a station management entity (SME) or an application entity, and the SME or application entity looks for a locally preset sensing result and operation mapping table according to a value of the service result, determines operations to be executed, and executes the operations.

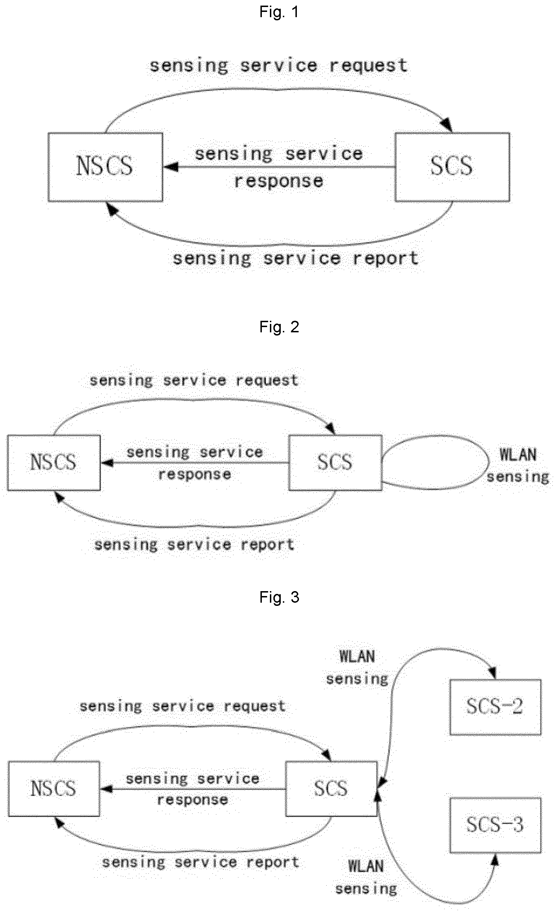

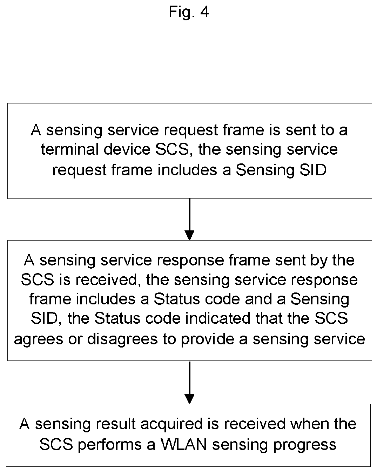

In conclusion, a method for providing a WLAN sensing service is applied to a terminal device. As shown in Fig. 1 and Fig. 4, the terminal device includes a terminal device NSCS without a WLAN sensing capability, includes:
a sensing service request frame is sent to a terminal device SCS, the sensing service request frame includes a Sensing SID;
a sensing service response frame sent by the SCS is received, the sensing service response frame includes a Status code and a Sensing SID, the Status code indicating that the SCS agrees or disagrees to provide a sensing service; and
a sensing result acquired when the SCS performs a WLAN sensing progress is received.

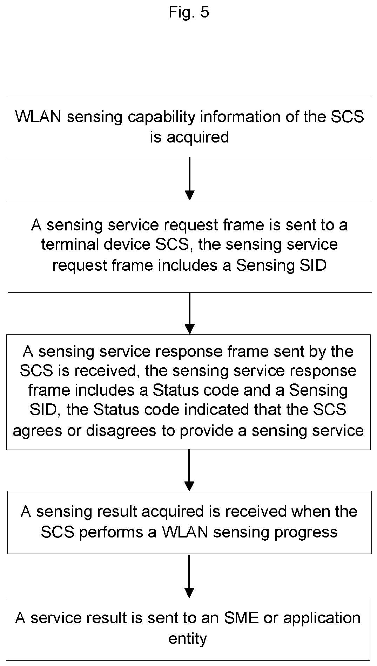

As shown in Fig. 5, before the step that a sensing service request frame is sent to an SCS, the method further includes: WLAN sensing capability information of the SCS is acquired. After the step that the sensing result acquired when the SCS performs a WLAN sensing progress is received, the method further includes: a service result is sent to an SME or application entity.

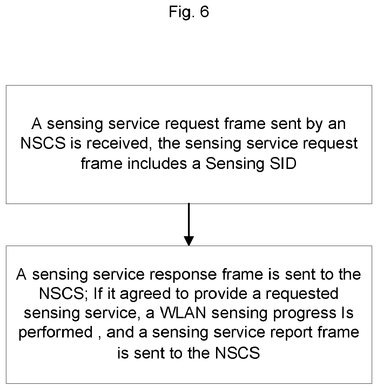

In another aspect, as shown in Fig. 6, the method is applied to a terminal device, and the terminal device includes a terminal device SCS with a WLAN sensing capability, includes:
a sensing service request frame sent by an NSCS is received, the sensing service request frame includes a Sensing SID; and
a sensing service response frame is sent to the NSCS; in a case that responding the sensing service response frame to agree to provide a requested sensing service, a value of the parameter, namely status code, is set to be SUCCESS; a WLAN sensing progress IS PERFORMED; a sensing service report frame is sent to the NSCS; if it is not agreed to provide the requested sensing service for the NSCS, the value of the parameter, namely status code, is set to be REFUSED.;

As shown in Fig. 2, the sensing service report frame is sent to the NSCS, includes: a WLAN sensing signal is sent, and the WLAN sensing signal is received and measured. the WLAN sensing signal is sent and the WLAN sensing signal is received and measured, includes: a WLAN sensing signal is sent, a reflected signal is received and measured, and according to a service corresponding to the Sensing SID, a sensing result is calculated; and according to the sensing result, a parameter, namely service result, is set, and a sensing service report frame is sent to the NSCS. The sensing service report frame includes the parameter, namely service result, and the service result is used for setting a sensing result calculated according to a sensing measurement result.

As shown in Fig. 3, performing the WLAN sensing progress by coordinating with other SCSs is sent.

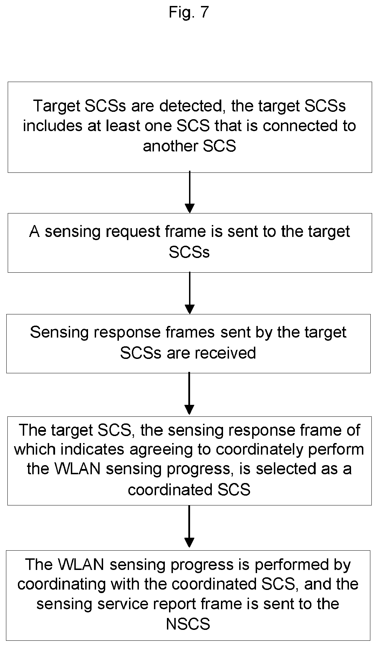

As shown in Fig. 7, the WLAN sensing signal is sent, and the WLAN sensing signal is received and measured, includes: target SCSs are detected, the target SCSs includes at least one SCS that is connected to another SCS which has the WLAN sensing capability; a sensing request frame is sent to the target SCSs; sensing response frames sent by the target SCSs are received; the target SCS, the sensing response frame of which indicates agreeing to coordinately perform the WLAN sensing progress, is selected as a coordinated SCS; and the WLAN sensing progress is performed by coordinating with the coordinated SCS, and the sensing service report frame is sent to the NSCS, the sensing service report frame includes the parameter, namely service result, and the service result is used for setting a sensing result calculated according to a sensing measurement result.

In the embodiment of the disclosure, based on the same inventive concept as that of the foregoing method for providing a WLAN sensing service, an embodiment of the disclosure further provides an apparatus. The apparatus is applied to a terminal device. The terminal device may be a smart watch without a WLAN sensing capability, or a smart tablet, a smart TV, a smart projector, a smart phone, etc. that has a WLAN sensing capability.

The apparatus includes:
a communication module I, configured to send a sensing service request frame to a terminal device SCS with a WLAN sensing capability, the sensing service request frame includes a sensing service identifier (Sensing SID); and
a communication module II, configured to receive a sensing service response frame sent by the SCS, the sensing service response frame includes a Status code and a Sensing SID, and the Status code indicating that the SCS agrees or disagrees to provide a sensing service; and receive a sensing result acquired when the SCS performs a WLAN sensing progress.

The apparatus further includes an acquisition module configured to acquire WLAN sensing capability information of the SCS.

The apparatus further includes an SME or application entity. The communication module I is further configured to send a service result to the SME or application entity.

The apparatus includes:
a sensing module III, configured to receive a sensing service request frame sent by an NSCS, the NSCS being a terminal device without a WLAN sensing capability, the sensing service request frame including a Sensing SID; and
a sensing module IV, configured to send a sensing service response frame to the NSCS; configured to perform, according to the sensing service that is agreed to be provided, a WLAN sensing progress, and send a sensing service report frame to the NSCS.

The sensing module II includes a communication unit, a calculation unit, and a setting unit. The communication unit is configured to send a WLAN sensing signal, receive and measure a reflected signal, and send a sensing service report frame to the NSCS; the calculation unit is configured to calculate, according to a service corresponding to the Sensing SID, a sensing result; and the setting unit is configured to set, according to the sensing result, a parameter, namely service result.

Or, the sensing module II includes a communication unit, a calculation unit and a detection selection unit. The communication unit includes sending a sensing request frame to a target SCS, receiving a sensing response frame sent by the target SCS, performing a WLAN sensing progress by coordinating with a coordinated SCS, and sending a sensing service report frame to the NSCS; the detection selection unit selects the target SCS, the sensing response frame of which instructs agreeing to perform the WLAN sensing progress, as a coordinated SCS; and the calculation unit is configured to calculate, according to the WLAN sensing signal, a sensing result.

In the embodiment of the disclosure, based on the same inventive concept as that of the foregoing method for providing a WLAN sensing service, an embodiment of the disclosure further provides a terminal device. The terminal device includes a processor and a memory. The memory stores a computer program. The processor is configured to execute the computer program to implement the foregoing method for providing a WLAN sensing service.

In addition, an embodiment of the disclosure further provides a storage medium. The storage medium stores a computer program. The computer program, when executed, implements the method for providing a WLAN sensing service provided by the foregoing method embodiment. The specific description may refer to the foregoing method embodiment, and descriptions thereof are omitted here in this embodiment of the disclosure. In conclusion, according to the method for providing the WLAN sensing service provided by the embodiment of the disclosure, this type of device can provide more abundant applications according to a WLAN sensing function without adding any hardware and software cost.

In the several embodiments provided by the disclosure, it should be understood that the disclosed apparatuses and methods may be implemented in other manners. The apparatus embodiments described above are merely illustrative, for example, the flowcharts and block diagrams in the accompanying drawings illustrate possible architectures, functions and operations of apparatuses, methods and computer program products according to various embodiments of the disclosure. In this regard, each block in the flowcharts or block diagrams may represent a module, program segment, or a part of a code, and the module, program segment, or the part of code contains one or more executable instructions used for realizing specified logic functions. It should also be noted that in some alternative implementation modes, the functions marked in the blocks may also occur in a different order from the order marked in the drawings. For example, two blocks shown in succession can actually be executed substantially in parallel, and they can sometimes be executed in a reverse order, depending on the functions involved. It should also be noted that each block in the block diagrams and/or flowcharts, and combinations of the blocks in the block diagrams and/or flowcharts can be implemented by a dedicated hardware-based system that performs specified functions or operations, or it can be implemented by a combination of dedicated hardware and computer instructions.

In addition, each functional module in each embodiment of the disclosure may be integrated together to form an independent part, or each module may exist alone, or two or more modules may be integrated to form an independent part.

If the functions are implemented in the form of software function modules and sold or used as independent products, they can be stored in a computer-readable storage medium. Based on this understanding, the technical solution of the disclosure can be embodied in the form of a software product in essence, or the part that contributes to the prior art or the part of the technical solution. The computer software product is stored in a storage medium, including Several instructions are used to cause a computer device (which may be a personal computer, a server, or a network device, etc.) to execute all or part of the steps of the method described in each embodiment of the disclosure. The aforementioned storage medium includes: a U disk, a mobile hard disk, a random access memory (RAM), a read only memory (ROM), a magnetic disk or an optical disk and other media that can store program codes.

The above descriptions are merely preferred embodiments of the disclosure and are not intended to limit the disclosure. For those skilled in the art, the disclosure may have various modifications and changes.

In addition, it should be noted that in this context, relational terms such as "first", "second", and "third" are used merely to distinguish one entity or operation from another entity or operation, instead of necessarily requiring or implying that these entities or operations have any of these actual relationships or orders. Furthermore, terms "include", "including" or any other variants are meant to cover non-exclusive inclusions, so that a process, method, object or device that includes a series of elements not only includes those elements, but also includes other elements which are not definitely listed, or further includes inherent elements of this process, method, object or device.

## Claims

1. A method for providing a WLAN sensing service, being applied to a terminal device, the terminal device comprising a terminal device Sensing Capable STA, SCS, the method comprising:
receiving a sensing service request frame sent by an Non Sensing Capable STA ,NSCS, the sensing service request frame comprising a Sensing SID; and
sending a sensing service response frame to the NSCS; in a case that responding the sensing service response frame to agree to provide a requested sensing service, performing a WLAN sensing progress, and sending a sensing service report frame to the NSCS.

2. The method for providing the WLAN sensing service as claimed in claim 1, wherein in a case that responding the sensing service response frame to agree to provide the requested sensing service, performing the WLAN sensing progress, and sending the sensing service report frame to the NSCS, comprises:
sending a WLAN sensing signal, and receiving and measuring the WLAN sensing signal;
or performing the WLAN sensing progress by coordinating with other SCSs.

3. The method for providing the WLAN sensing service as claimed in claim 2, wherein sending the WLAN sensing signal, and receiving and measuring the WLAN sensing signal, includes:
sending a WLAN sensing signal, receiving and measuring a reflected signal, and calculating a sensing result according to a service corresponding to the Sensing SID; and
setting a parameter, namely service result, according to the sensing result, and sending the sensing service report frame to the NSCS, the sensing service report frame including the parameter, namely service result, and the service result being used for setting a sensing result calculated according to a sensing measurement result.

4. The method for providing the WLAN sensing service as claimed in claim 2, wherein performing the WLAN sensing progress by coordinating with other SCSs, includes:
detecting target SCSs, the target SCSs including at least one SCS that is connected to another SCS;
sending a sensing request frame to the target SCSs;
receiving sensing response frames sent by the target SCSs;
selecting a target SCS, the sensing response frame of which instructs agreeing to coordinately perform the WLAN sensing progress, form the target SCSs, as a coordinated SCS; and performing the WLAN sensing progress by coordinating with the coordinated SCS, and
sending the sensing service report frame to the NSCS, the sensing service report frame including the parameter, namely service result, and the service result being used for setting a sensing result calculated according to a sensing measurement result.

5. The method for providing the WLAN sensing service as claimed in claim 4, wherein performing the WLAN sensing progress by coordinating with the coordinated SCS, comprises:
sending a WLAN sensing signal to the coordinated SCS;
receiving channel status information ,CSI, acquired, according to the WLAN sensing signal, by the coordinated SCS; and
calculating, according to the CSI, the sensing result, and setting, according to the sensing result, the parameter, namely service result.

6. The method for providing the WLAN sensing service as claimed in claim 4, wherein performing the WLAN sensing progress by coordinating with the coordinated SCS, comprises:
sending a sensing data packet announcement frame, and after a system time interval ,SIFS, sending a WLAN sensing signal to the coordinated SCS;
receiving CSI acquired, according to the WLAN sensing signal, by the coordinated SCS; and
calculating, according to the CSI, the sensing result, and setting, according to the sensing result, the parameter, namely service result.

7. The method for providing the WLAN sensing service as claimed in claim 4, wherein performing the WLAN sensing progress by coordinating with the coordinated SCS, comprises:
sending a trigger message to the coordinated SCS;
receiving a WLAN sensing signal sent, according to the trigger message, by the coordinated SCS; and
receiving the WLAN sensing signal, calculating the sensing result, and setting, according to the sensing result, the parameter, namely service result.

8. The method for providing the WLAN sensing service as claimed in claim 4, wherein performing the WLAN sensing progress by coordinating with the coordinated SCS, comprises:
sending a sensing confirm frame to the coordinated SCS;
receiving, according to the sensing confirm frame, a WLAN sensing signal sent by the coordinated SCS; and
receiving the WLAN sensing signal, calculating the sensing result, and setting, according to the sensing result, the parameter, namely service result.

9. The method for providing the WLAN sensing service as claimed in claim 4, wherein performing the WLAN sensing progress by coordinating with the coordinated SCS, comprises:
receiving a sensing data packet announcement frame sent by the coordinated SCS and a WLAN sensing signal sent after a SIFS, the sensing data packet announcement frame being positioned behind the sensing response frame; and
receiving the WLAN sensing signal, calculating the sensing result, and setting the parameter, namely service result.

10. An apparatus, comprising:
a sensing module III, configured to receive a sensing service request frame sent by an NSCS, the sensing service request frame comprising a Sensing SID; and
a sensing module IV, configured to send a sensing service response frame to the NSCS; in a case that responding the sensing service response frame to agree to provide a requested sensing service, perform a WLAN sensing progress, and send a sensing service report frame to the NSCS.

11. A terminal device, wherein comprises a processor and a memory, wherein the memory stores a computer program; and the processor is configured to execute the computer program to implement the method for providing a WLAN sensing service as claimed in claim 1.

12. A storage medium, which stores a computer program, wherein the computer program, when executed, implements the method for providing a WLAN sensing service as claimed in claim 1.
